# EUROPÄISCHE PATENTSCHRIFT

(11) **EP 4 466 482 B1**
(45) Veröffentlichungstag und Bekanntmachung des Hinweises auf die Patenterteilung: **26.11.2025**
(21) Anmeldenummer: 23701652.2
(22) Anmeldetag: 20.01.2023
(51) Int. Cl.: F16L 55/32

(54) **INSPEKTIONSVORRICHTUNG**
INSPECTION DEVICE
DISPOSITIF D'INSPECTION

(30) Priorität: 05.04.2022 DE 102022203384
(43) Veröffentlichungstag der Anmeldung: 27.11.2024
(73) Patentinhaber: Siemens Energy Global GmbH & Co. KG, 81739 München (DE)
(72) Erfinder: BERGNER, Kai, 90763 Fürth (DE); NICKL, Matthias, 91056 Erlangen (DE)
(86) Internationale Anmeldenummer: PCT/EP2023/051309
(87) Internationale Veröffentlichungsnummer: WO 2023/193968

(56) Entgegenhaltungen:
- WO-A1-2010/023524
- CN-A- 110 711 750
- US-A- 3 018 086

## Beschreibung

Die vorliegende Erfindung betrifft eine Inspektionsvorrichtung, die zum Inspizieren von für den Menschen unzugänglichen Bereichen von Maschinen und/oder Anlagekomponenten und/oder Rohrleitungssystemen ausgelegt ist und zumindest einen Antriebswagen sowie zumindest einen weiteren, eine Inspektionseinrichtung aufweisenden Wagen umfasst, der über eine Gelenkeinrichtung mit dem Antriebswagen verbindbar ist, wobei der Antriebswagen ein Gehäuse, zwei Räder, die um zwei miteinander fluchtende Drehachsen drehbar an dem Gehäuse gehalten sind, einen eine erste Motorwelle aufweisenden ersten Elektromotor, der das erste Rad drehend antreibt, und einen eine zweite Motorwelle aufweisenden zweiten Elektromotor umfasst, der das zweite Rad drehend antreibt.

Inspektionsvorrichtungen zum Inspizieren von für den Menschen unzugänglichen Bereichen von Maschinen und/oder Anlagekomponenten und/oder Rohrleitungssystemen sind im Stand der Technik in unterschiedlichen Ausgestaltungen bekannt, beispielsweise in Form von Videoendoskopiegeräten, bei denen eine Videooptik unter Verwendung von glasfaserverstärkten Schubstangen in eine zu inspizierende Rohrleitung oder in andere schwer zugängliche Geometrien geschoben wird. Der Einsatz solcher Videoendoskopiegeräte ist allerdings nur in Geometrien oder Rohrleitungssystemen möglich, die sich nicht mehrfach verzweigen. Auch sind Richtungsänderungen bei der sogenannten Befahrung von Rohrleitungen und anderen Geometrien nur begrenzt möglich. So lassen sich beispielsweise Vertikal-Horizontal-Richtungsänderungen kaum realisieren. Entsprechend ist die Einsetzbarkeit solcher Videoendoskopiegeräte stark eingeschränkt.

Ferner bekannt sind Inspektionsvorrichtungen in Form von ferngesteuerten Inspektionsdrohnen, die kabelgebunden oder kabellos ausgeführt sein können und über angetriebene Räder, Ketten oder dergleichen verfügen. Eine Inspektionsvorrichtung in Form einer solchen Inspektionsdrohne ist beispielsweise aus der DE 10 2020 203 453 A1 bekannt. Diese Inspektionsdrohne weist zumindest drei Wagen auf, die mit jeweils zwei Rädern ausgestattet sein können und über Gelenkeinrichtungen miteinander verbunden sind. Durch die Unterteilung der Inspektionsvorrichtung in mehrere gelenkig miteinander verbundene Wagen wird eine raupenartige Inspektionsdrohne geschaffen, die in Abhängigkeit von der Art der Gelenkeinrichtungen sehr flexibel ist und auch Vertikal-Horizontal-Richtungsänderungen bewältigen kann. Zwei der Wagen sind als Antriebswagen ausgeführt. Die Antriebswagen sind mit Antrieben versehen, welche die jeweiligen Räder drehend antreiben. Gemäß einer Ausführungsform können die Antriebe als elektrische Nabenantriebe ausgebildet sein, welche die Räder direkt antreiben. Die Nabenantriebe sind in der Vorne-Hinten-Richtung des Antriebwagens entsprechend nebeneinander derart positioniert, dass ihre Motorwellen miteinander fluchten. Ein Problem dieser Bauweise besteht darin, dass die Breite der Antriebswagen aufgrund der Länge von auf dem Markt erhältlichen Motoren recht groß ausfällt, wodurch die Einsetzbarkeit der Inspektionsvorrichtung eingeschränkt wird.

Die WO 2010/023524 Al zeigt eine Inspektionsvorrichtung, die einen Antriebswagen umfasst. Der Antriebswagen zeigt ein Gehäuse, zwei Räder, die um zwei miteinander fluchtende Drehachsen drehbar an dem Gehäuse gehalten sind. Er umfasst einen eine erste Motorwelle aufweisenden ersten Elektromotor, der das erste Rad drehend antreibt, und einen eine zweite Motorwelle ausweisenden zweiten Elektromotor umfasst, der das zweite Rad drehend antreibt. Die Elektromotoren antreiben das jeweilige Rad jeweils über ein Getriebe drehend antreiben, und die Drehachsen erstrecken sich zwischen den Motorwellen der Elektromotoren.

Ausgehend von diesem Stand der Technik ist es eine Aufgabe der vorliegenden Erfindung, eine Inspektionsvorrichtung mit alternativem Aufbau zu schaffen.

Zur Lösung dieser Aufgabe schafft die vorliegende Erfindung eine Inspektionsvorrichtung der eingangs genannten Art, die dadurch gekennzeichnet ist, dass die Elektromotoren das jeweilige Rad jeweils über ein Getriebe drehend antreiben, und dass sich die Drehachsen zwischen den Motorwellen der Elektromotoren erstrecken. Die Elektromotoren sind somit in der Vorne-Hinten-Richtung des Antriebswagens hintereinander positioniert, so dass die Breite des Antriebswagens deutlich geringer als die Breite bekannter Inspektionsdrohnen ausfällt, insbesondere geringer als die Breite der in der DE 10 2020 203 453 A1 beschriebenen Inspektionsdrohne mit dem eingangs beschriebenen Aufbau. Entsprechend ist die erfindungsgemäße Inspektionsvorrichtung sehr flexibel einsetzbar. Ein weiterer Vorteil der erfindungsgemäßen Inspektionsvorrichtung besteht darin, dass Dank der Getriebe die auf die Räder übertragbaren Drehmomente einstellbar sind, so dass die Elektromotoren nicht nur hinsichtlich ihrer Länge sondern auch hinsichtlich ihres Drehmomentes viel flexibler ausgewählt werden können.

Gemäß einer Ausgestaltung der vorliegenden Erfindung sind die Getriebe identisch ausgebildet, wodurch ein einfacher und preiswert herzustellender Aufbau erzielt wird.

Die Getriebe weisen bevorzugt mehrere Zahnräder auf, insbesondere jeweils genau zwei Zahnräder.

Die Geometrien der Zahnräder jedes Getriebes sind vorteilhaft derart gewählt, dass die Antriebsdrehzahl geringer als die Motordrehzahl ist, wodurch vergleichsweise hohe Drehmomente erzielt werden können.

Gemäß einer Ausgestaltung der vorliegenden Erfindung sind die Zahnräder jeweils über eine Welle-Nabe-Verbindung, insbesondere über eine formschlüssige Welle-Nabe-Verbindung an drehbar am Gehäuse gelagerten, mit den Drehachsen fluchtenden Achsen, an denen die Räder drehfest gehalten sind, und an Motorwellen der Elektromotoren befestigt. Auf diese Weise wird ein sehr einfacher und leicht zu montierender Aufbau erzielt.

Die Achsen sind bevorzugt formschlüssig zwischen einem aufwärts in den Innenraum des Gehäuses vorstehenden Gehäuseabsatz und zumindest einem von oben auf den Gehäuseabsatz aufgesetzten und mit diesem verbundenen, insbesondere lösbar verbundenen Achshalter positioniert.

Gemäß einer Ausgestaltung der vorliegenden Erfindung weisen die Räder jeweils eine Felge und einen an der Felge gehaltenen, die Lauffläche des Rades bildenden Magnetring auf, der insbesondere als Neodym-Magnetring ausgeführt ist. Die Magnetringe sorgen dafür, dass der Antriebswagen auf metallischen Oberflächen auch über Kopf problemlos bewegt werden kann. Bevorzugt sind auch die Räder der anderen Wagen mit entsprechenden Magnetringen versehen.

Am Gehäuse des zumindest einen Antriebswagens ist zumindest ein auswärts nach vorne oder hinten vorstehender, ringförmig ausgebildeter Anker vorgesehen, der einen Teil der Gelenkeinrichtung bildet. Alle anderen Wagen sind vorteilhaft mit zwei auswärts vorstehenden, ringförmig ausgebildeten Ankern versehen, wobei ein Anker nach vorne und der andere Anker nach hinten vorsteht.

Die Gelenkeinrichtung weist vorteilhaft ein längliches Verbindungselement auf, das an seinen gegenüber liegenden Endbereichen sich parallel zueinander erstreckende Durchgangsöffnungen aufweist, die jeweils zur Aufnahme eines Ankers ausgelegt sind. Entsprechend wird ein sehr einfacher und preiswerter Aufbau erzielt, bei dem sich die Wagen sowohl horizontal als auch vertikal zueinander schwenken lassen.

Bevorzugt weist das Verbindungselement zwei lösbar miteinander verbindbare Verbindungselementhälften auf, wobei die Trennlinie zwischen den Verbindungselementhälften durch die Durchgangsöffnungen in deren Erstreckungsrichtung verläuft.

Die lösbare Verbindung wird insbesondere unter Verwendung zumindest einer Befestigungsschraube erzielt.

Eine Verbindungselementhälfte kann zumindest einen Verbindungszapfen aufweisen, der im montierten Zustand beider Verbindungselementhälften in eine korrespondierende Aussparung der anderen Verbindungselementhälfte greift. Vorteilhaft sind mehrere solcher Verbindungszapfen mit korrespondierenden Aussparungen vorgesehen, wodurch eine sehr sichere Verbindung erzielt wird.

Weitere Merkmale und Vorteile der vorliegenden Erfindung werden anhand der nachfolgenden Beschreibung unter Bezugnahme auf die beiliegende Zeichnung deutlich. Darin ist
- Figur 1: eine schematische Seitenansicht einer Inspektionsvorrichtung gemäß einer Ausführungsform der vorliegenden Erfindung;
- Figur 2: eine detailliertere perspektivische Ansicht eines Antriebswagens der in Figur 1 dargestellten Inspektionsvorrichtung;
- Figur 3: eine perspektivische Explosionsansicht des in Figur 2 dargestellten Antriebswagens;
- Figur 4: eine Vorderansicht des in Figur 2 dargestellten Antriebswagens;
- Figur 5: eine perspektivische Ansicht einer Gehäuseunterschale;
- Figur 6: eine perspektivische Ansicht einer Gehäuseoberschale;
- Figur 7: eine perspektivische Ansicht einer Felge des in Figur 2 dargestellten Antriebswagens;
- Figur 8: eine Schnittansicht der in Figur 7 dargestellten Felge;
- Figur 9: eine perspektivische Ansicht einer Achse des in Figur 2 dargestellten Antriebswagens;
- Figur 10: eine Seitenansicht der in Figur 6 dargestellten Achse;
- Figur 11: eine perspektivische Ansicht eines ersten Zahnrads des in Figur 2 dargestellten Antriebswagens;
- Figur 12: eine perspektivische Ansicht eines zweiten Zahnrads des in Figur 2 dargestellten Antriebswagens
- Figur 13: eine perspektivische Ansicht einer in den Figuren 9 und 10 dargestellten Achse mit daran befestigtem zweiten Zahnrad, das mit einem ersten Zahnrad in Eingriff ist;
- Figur 14: eine perspektivische Ansicht des Achshalters des in Figur 2 dargestellten Antriebswagens;
- Figur 15: eine perspektivische Ansicht eines Kabeleinlasses des in Figur 2 dargestellten Antriebswagens;
- Figur 16: eine Schnittansicht des in Figur 15 dargestellten Kabeleinlasses;
- Figur 17: eine perspektivische Ansicht eines Ankers des in Figur 2 dargestellten Antriebswagens;
- Figur 18: eine perspektivische Ansicht einer ersten Verbindungselementhälfte eines Verbindungselementes der in Figur 1 dargestellten Inspektionsvorrichtung;
- Figur 19: eine Seitenansicht der in Figur 18 dargestellten Verbindungselementhälfte;
- Figur 20: eine perspektivische Ansicht einer zweiten Verbindungselementhälfte des Verbindungselementes;
- Figur 21: eine Seitenansicht der in Figur 20 dargestellten Verbindungselementhälfte;
- Figur 22: eine perspektivische Ansicht eines Stopfens des in Figur 2 dargestellten Antriebswagens; und
- Figur 23: eine Seitenansicht des in Figur 22 dargestellten Stopfens.

Gleiche Bezugsziffern beziehen sich nachfolgend auf gleiche oder gleichartig ausgeführte Bauteile.

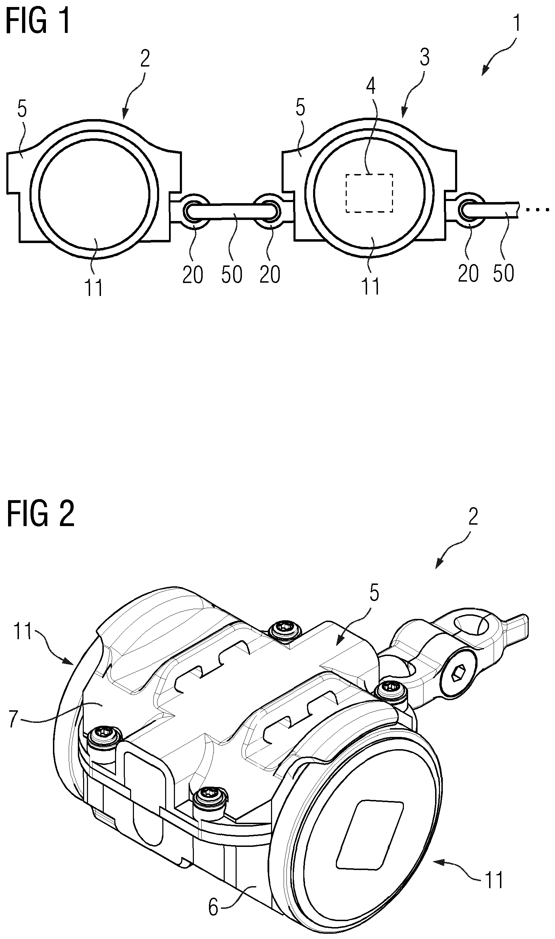

Figur 1 zeigt eine Inspektionsvorrichtung 1 gemäß einer Ausführungsform der vorliegenden Erfindung, die dazu ausgelegt ist, für den Menschen unzugängliche Bereiche von Maschinen und/oder Anlagekomponenten und/oder Rohrleitungssystemen zu inspizieren. Die Inspektionsvorrichtung 1 umfasst mehrere aufeinander folgende Wagen 2, 3, von denen in Figur 1 nur zwei Wagen dargestellt sind. Die Wagen 2, 3 sind jeweils über Gelenkeinrichtungen lösbar aneinander befestigt. Die äußersten beiden Wagen sind bei der vorliegenden Ausführungsform als Antriebswagen 2 ausgeführt, wobei grundsätzlich zumindest ein Antriebswagen 2 vorhanden sein muss. Zumindest einer der anderen Wagen 3 umfasst eine in Figur 1 nur schematisch angedeutete Inspektionseinrichtung 4, beispielsweise in Form einer Kamera, eines Mikroskops, eines Ultraschallmesskopfes, eines Wirbelstrommesskopfes oder dergleichen. Es sollte klar sein, dass die weiteren Wagen 3 in Abhängigkeit von der durchzuführenden Inspektion auch mit einer Vielzahl unterschiedlicher Inspektionseinrichtungen 4 versehen sein können. Auch ist es grundsätzlich möglich, den oder die Antriebswagen 2 mit Inspektionseinrichtungen 4 auszustatten.

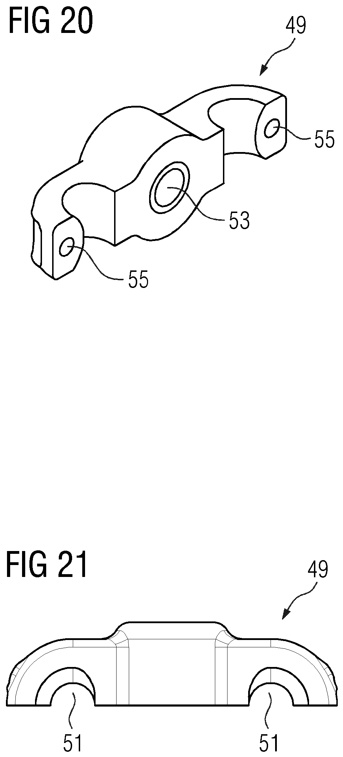

Die Figuren 2 bis 23 zeigen einen Antriebswagen 2 bzw. Bauteile desselben. Der Antriebswagen 2 umfasst ein Gehäuse 5, das in eine Gehäuseunterschale 6 und in eine Gehäuseoberschale 7 unterteilt ist, eine ringförmige, zwischen Gehäuseunterschale 6 und Gehäuseoberschale 7 einzusetzende Dichtung 8, zwei Elektromotoren 9, zwei Achsen 10, zwei Räder 11, die jeweils eine Felge 12 und einen an der Felge 12 gehaltenen, die Lauffläche des Rads 11 bildenden Magnetring 13 aufweisen, zwei Gleitlager 14, zwei O-Ringe 15, zwei erste Zahnräder 16 und zwei zweite Zahnräder 17, einen Achshalter 18, einen Kabeleinlass 19, einen Anker 20, einen Stopfen 21 sowie mehrere Befestigungsschrauben 22.

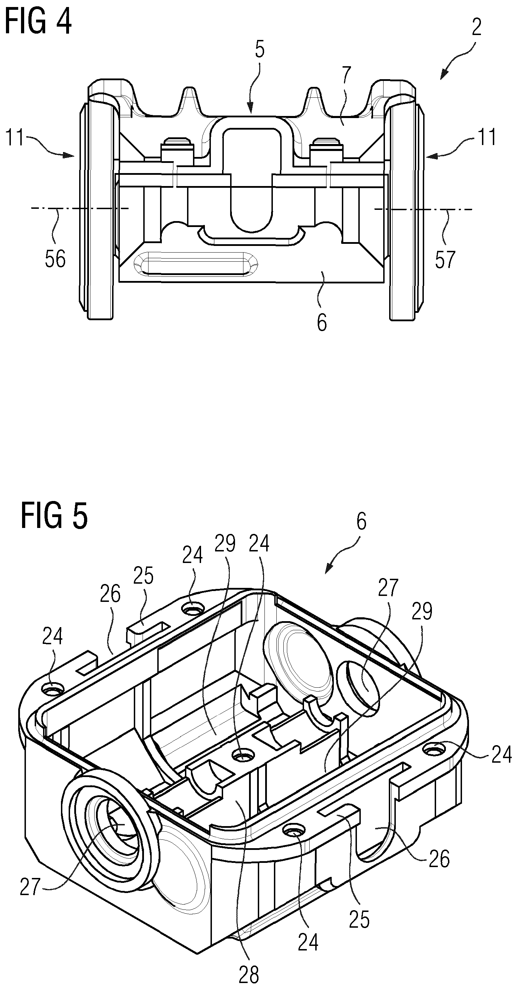

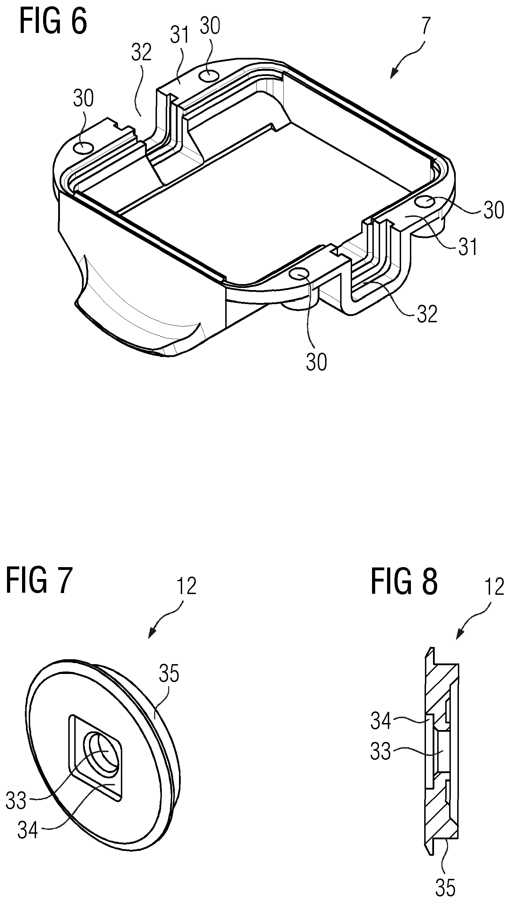

Das Gehäuse 5 ist aus Kunststoff hergestellt, vorliegend aus PA12. Die Gehäuseunterschale 6, die in Figur 5 dargestellt ist, ist entlang ihres oberen Randbereiches, der mit der Gehäuseoberschale 7 in Eingriff kommt, mit einer Dichtungsaufnahmenut oder Dichtungsaufnahmefläche 23 zur Aufnahme der Dichtung 8 versehen. Einander gegenüberliegend sind im oberen Bereich mit Gewindebohrungen 24 versehene Befestigungsflansche 25 angeordnet. Ausgehend von diesen Befestigungsflanschen 25 erstrecken sich abwärts der Seitenwände einander gegenüberliegend mittig positionierte Aufnahmenuten 26, deren Geometrie derart gewählt ist, dass in diese der Anker 20 einerseits und der Stopfen 21 andererseits von oben formschlüssig eingeführt werden können. An den anderen beiden Gehäuseseiten sind Durchgangsöffnungen 27 ausgebildet, die miteinander fluchten und deren Geometrie derart gewählt ist, dass sich in diese die Gleitlager 14 mit darauf aufgesetztem O-Ring 15 von außen formschlüssig einsetzen lassen. Im Innenraum der Gehäuseunterschale 6 ist mittig ein aufwärts vorstehender Gehäuseabsatz 28 ausgeformt, der zur formschlüssigen Aufnahme der von oben aufgesetzten, später noch genauer beschriebenen Achsen 10 ausgebildet ist. Im mittleren Bereich des Gehäuseabsatzes 28 ist eine weitere Gewindebohrung 24 positioniert. Jeweils benachbart zum Gehäuseabsatz 28 sind im Innenraum der Gehäuseunterschale 6 Aufnahmemulden 29 zur formschlüssigen Aufnahme der beiden Elektromotoren 9 ausgebildet. Figur 6 zeigt die zugehörige Gehäuseoberschale 7. Auch diese umfasst an gegenüberliegenden Seiten im unteren Bereich zwei mit Durchgangsbohrungen 30 versehene Befestigungsflansche 31, die komplementär zu den Gewindebohrungen 24 und Befestigungsflanschen 25 der Gehäuseunterschale 6 ausgebildet sind, so dass die Gehäuseoberschale 7 auf die Gehäuseunterschale 6 mit der dazwischen angeordneten Dichtung 8 aufgesetzt und unter Verwendung von Befestigungsschrauben 32 lösbar mit dieser verbunden werden kann. Ausgehend von den Befestigungsflanschen 31 erstrecken sich aufwärts Aussparungen 32, welche die Aufnahmenuten 26 der Gehäuseunterschale 6 fortsetzen und zur Aufnahme des Kabeleinlasses 19 einerseits und des Stopfens 21 andererseits dienen.

Die Figuren 7 und 8 zeigen die Felge 12, die bevorzugt aus Kunststoff hergestellt ist, vorliegend aus PA12. Die Felge 12 weist eine Durchgangsbohrung 33 zur Aufnahme einer Achse 10 auf, die an der Außenseite in einer rechteckigen Vertiefung 34 mündet. Ferner weist die Felge 12 an ihrer Umfangsseite einen Aufnahmeabsatz 35 auf, dessen Durchmesser derart gewählt ist, dass einer der Magnetringe 13 auf diese aufgeschoben werden kann. Die Befestigung des Magnetrings 13 an der Felge 12 kann kraftschlüssig über einen Presssitz oder auch unter Verwendung eines Klebstoffes erfolgen.

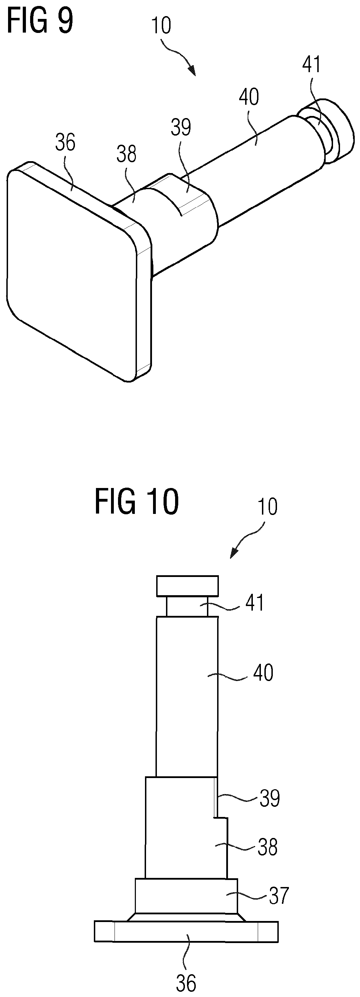

Die in den Figuren 9 und 10 dargestellte Achse 10 ist gestuft ausgebildet und bevorzugt aus einer Metalllegierung hergestellt, vorliegend aus X 5 CrNi 18 10. Sie umfasst, von außen einwärts betrachtet, einen rechteckigen Kopfabschnitt 36, dessen Abmessungen entsprechend der rechteckigen Vertiefung 34 der Felge 12 gewählt sind, einen Felgenaufnahmeabschnitt 37, dessen Durchmesser entsprechend der Durchgangsbohrung 33 der Felge 12 gewählt ist, einen Lageraufnahmeabschnitt 38, dessen Durchmesser dem Innendurchmesser des Gleitlagers 14 entsprechend gewählt ist, einen unrund ausgebildeten Zahnradaufnahmeabschnitt 39 und einen Befestigungsabschnitt 40, der von dem aufwärts vorstehenden Gehäuseabsatz 28 der Gehäuseunterschale 6 aufgenommen wird. Die Geometrien der oberen Fläche des Gehäuseabsatzes 28 und des Befestigungsabschnitts 40 der Achse 10 sind derart gewählt, dass der Befestigungsabschnitt 40 formschlüssig auf den Gehäuseabsatz 28 aufsetzbar ist. Hierzu ist am Ende des Befestigungsabschnitts 40 vorliegend eine umlaufende Nut 41 ausgebildet, um im montierten Zustand eine Verschiebung der Achse 10 in Achsrichtung zu verhindern.

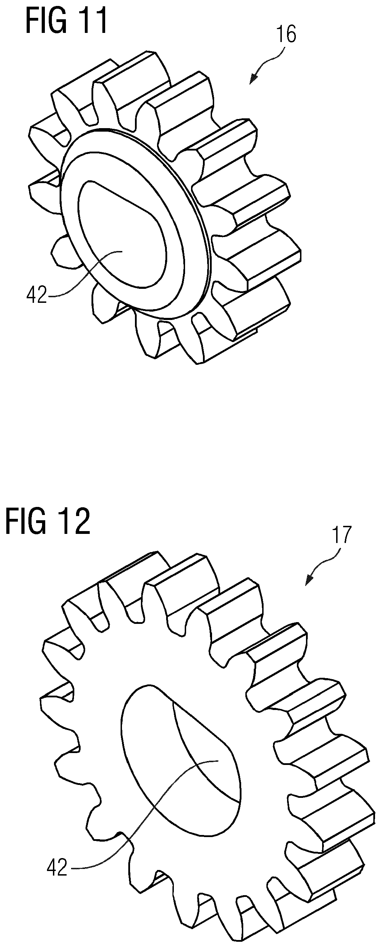

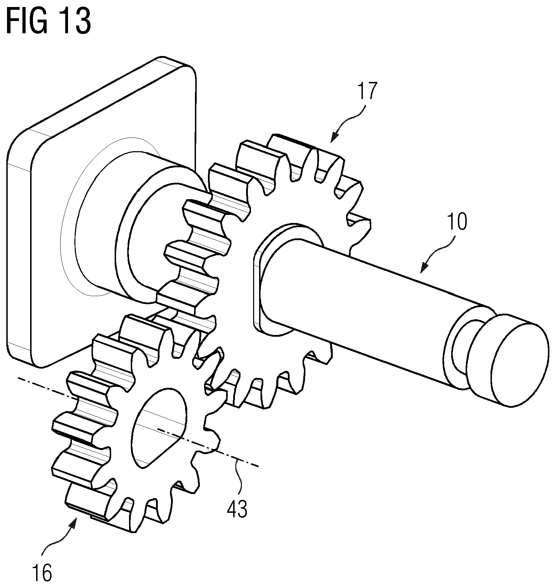

Die Figuren 11 und 12 zeigen das erste Zahnrad 16 einerseits und das zweite Zahnrad 17 andererseits, die beide bevorzugt aus einer Metalllegierung hergestellt sind, vorliegend aus CuZn39Pb3. Das erste Zahnrad 16 ist bei der dargestellten Ausführungsform bezogen auf den Außendurchmesser kleiner ausgebildet als das zweite Zahnrad 17 und umfasst vorliegend dreizehn Zähne, während das zweite Zahnrad 17 vorliegend siebzehn Zähne aufweist. Beide Zahnräder 16, 17 sind mit einer mittigen Durchgangsöffnung 42 mit unrundem Querschnitt versehen, wobei die Form des unrunden Querschnitts an die Außenkontur des Zahnradaufnahmeabschnitts 39 der Achse 10 einerseits und einer nicht im Detail dargestellten Motorwelle 43 der Elektromotoren 9 andererseits derart angepasst ist, dass sich das erste Zahnrad 16 auf die Motorwelle 43 und das zweite Zahnrad 17 auf die Achse 10 formschlüssig aufstecken lässt. Figur 13 zeigt exemplarisch eine Achse 10 mit an dieser angeordnetem zweiten Zahnrad 17, das mit dem ersten Zahnrad 16 kämmt, das auf die in dieser Figur durch die gestrichelte Linie angedeutete Motorwelle 43 aufgesteckt ist.

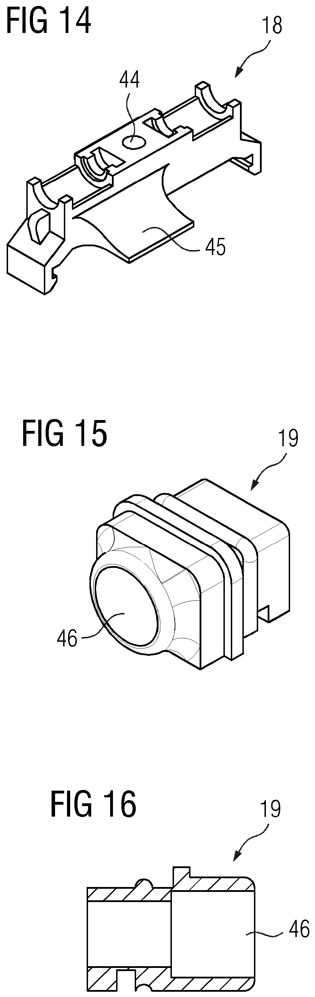

Figur 14 zeigt den Achshalter 18, dessen Unterseite komplementär zur Oberseite des an der Gehäuseunterschale 6 ausgebildeten Gehäuseabsatzes 28 ausgebildet und der mit einer Durchgangsbohrung 44 versehen ist, die fluchtend zur Gewindebohrung 24 des Gehäuseabsatzes 28 positioniert ist. An der Oberseite weist der Achshalter 18 zwei einander gegenüber angeordnete, auswärts vorstehende Niederhalter 45 auf, die im montierten Zustand von oben auf die in die Aufnahmemulden 29 der Gehäuseunterschale 6 eingesetzten Elektromotoren 9 drücken und diese in ihrer Position sichern. Der Achshalter 18 ist bevorzugt aus Kunststoff hergestellt, vorliegend aus PA12.

Figur 15 zeigt den Kabeleinlass 19, der bevorzugt aus einem thermoplastischen Kunststoff hergestellt ist, vorliegend aus TPU (thermoplastisches Polyurethan). Er ist mit einer zylindrischen Durchgangsöffnung 46 ausgebildet, durch die ein Kabel hindurchgeführt werden kann. Die Geometrie der Außenseite des Kabeleinlasses 19 ist derart gewählt, dass sich der Kabeleinlass 19 dichtend in eine der seitlichen Aussparungen 32 der Gehäuseoberschale 7 formschlüssig einsetzen lässt und dichtend auf dem in die darunter angeordnete Aufnahmenut 26 der Gehäuseunterschale 6 eingesetzten Anker 20 aufsitzt.

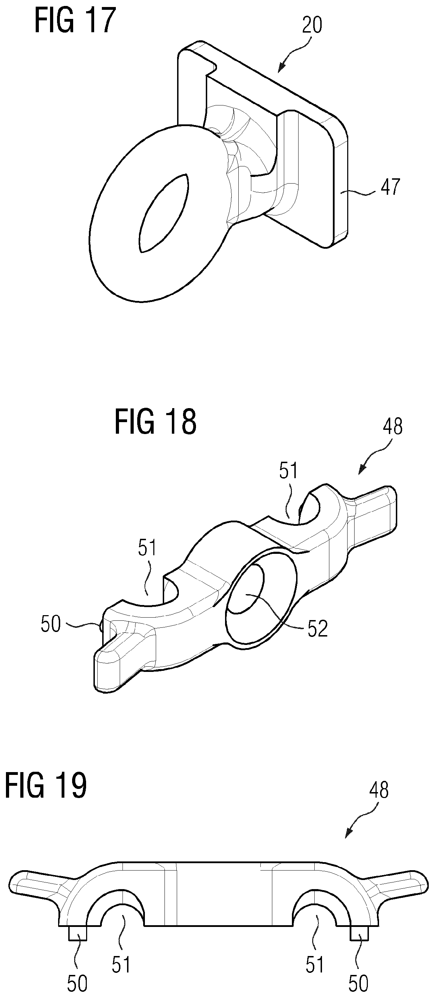

Figur 17 zeigt den ringförmig ausgebildeten Anker 20 mit einem plattenartig ausgebildeten Befestigungsabschnitt 47, dessen Abmessungen derart gewählt sind, dass sich dieser formschlüssig von oben in eine der Aufnahmenuten 26 der Gehäuseunterschale 6 einstecken lässt. Der Anker 20 ist bevorzugt aus Kunststoff hergestellt, vorliegend aus PA12.

Die Figuren 18 bis 21 zeigen zwei Verbindungselementhälften 48 und 49 des in Figur 1 schematisch dargestellten Verbindungselementes 50, das bevorzugt aus Kunststoff hergestellt ist, vorliegend aus PA12. Das Verbindungselement 50 ist länglich ausgebildet und weist an seinen gegenüberliegenden Endbereichen zwei sich parallel zueinander erstreckende Durchgangsöffnungen 51 auf, die jeweils zur Aufnahme eines Ankers 20 ausgelegt sind. Die Trennlinie zwischen den beiden Verbindungselementhälften 48, 49 ist derart gewählt, dass diese durch die Durchgangsöffnungen 51 in deren Erstreckungsrichtung verläuft. Die erste Verbindungselementhälfte 48 ist mittig mit einer Durchgangsbohrung 52 versehen, die in Richtung der zweiten Verbindungselementhälfte 49 weist. Die zweite Verbindungselementhälfte 49 ist mit einer fluchten zur Durchgangsbohrung 52 angeordneten Gewindebohrung 53versehen, so dass sich beide Verbindungselementhälften 48, 49 mit einer Befestigungsschraube 22 verbinden lassen. Zusätzlich ist die erste Verbindungselementhälfte 48 vorliegend mit zwei in Richtung der zweiten Verbindungselementhälfte 49 vorstehenden Verbindungszapfen 54 versehen, die in montiertem Zustand beider Verbindungselementhälften 48, 49 in korrespondierende Aussparungen 55 der zweiten Verbindungselementhälfte 49 greifen.

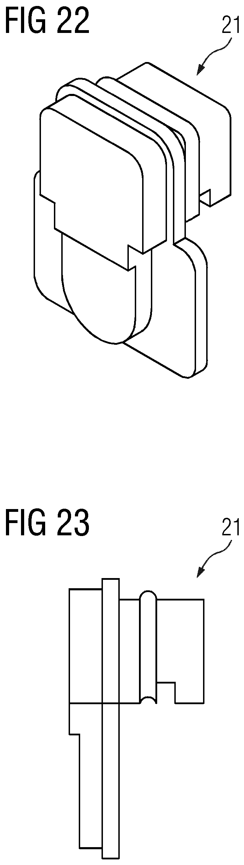

Die Figuren 22 und 23 zeigen den Stopfen 21, der sich dichtend in die Aufnahmenut 26 der unteren Gehäuseschale 6 und in die zugehörige Aussparung 32 der oberen Gehäuseschale 7 einsetzen lässt und im eingesetzten Zustand einen Eintritt von Feuchtigkeit in den Innenraum des Gehäuses 5 verhindert. Der Stopfen 21 ist bevorzugt aus einem thermoplastischen Kunststoff hergestellt, vorliegend aus TPU.

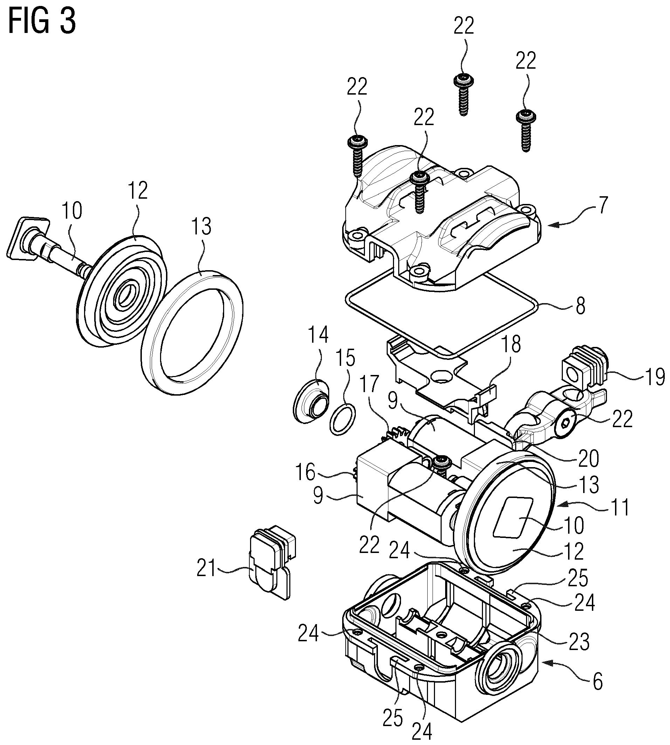

Zur Montage eines Antriebswagens 2 werden unter Bezugnahme auf Figur 3 zunächst die Elektromotoren 9 mit den an deren Motorwellen 43 unter Ausbildung formschlüssiger Welle-Nabe-Verbindungen montierten ersten Zahnrädern 16 in die Aufnahmemulden 29 der Gehäuseunterschale 6 von oben derart eingesetzt, dass die Elektromotoren 9 formschlüssig in den Aufnahmemulden 29 aufgenommen sind und die ersten Zahnräder 16 an gegenüberliegenden Seiten angeordnet sind.

In einem zweiten Schritt werden die Magnetringe 13 auf die zugehörigen Aufnahmeabsätze 35 der Felgen 12 aufgeschoben. Anschließend wird jeweils die Achse 10 durch die Durchgangsbohrung 33 der zugehörigen Felge 12 eingeführt, bis der rechteckige Kopfabschnitt 36 der Achse 10 in der rechteckigen Vertiefung 34 der Felge 12 formschlüssig aufgenommen ist. Daraufhin wird von der anderen Seite das Gleitlager 14 mit dem daran aufgenommenen O-Ring 15 auf den Lageraufnahmeabschnitt 38 der Achse 10 aufgeschoben. In einem weiteren Schritt werden die Achsen 10 von außen in die Durchgangsöffnungen 27 der Gehäuseunterschale 6 eingeführt, wobei die zweiten Zahnräder 17 auf den jeweiligen Zahnradaufnahmeabschnitten 39 der Achsen 6 unter Ausbildung einer formschlüssigen Welle-Nabe-Verbindung positioniert werden. Dabei werden die zweiten Zahnräder 17 mit den ersten Zahnrädern 16 im Innenraum des Gehäuses 5 miteinander in Eingriff gebracht und die Befestigungsabschnitte 40 der Achsen 10 an der Oberseite des aufwärts vorstehenden Gehäuseabsatzes 28 der Gehäuseunterschale 6 formschlüssig aufgenommen.

Nunmehr wird der Achshalter 18 auf den aufwärts vorstehenden Gehäuseabsatz 28 der Gehäuseunterschale 6 aufgesetzt und unter Verwendung einer Befestigungsschraube 22 mit diesem verschraubt. In diesem Zustand sind die Achsen 10 fest zwischen dem Gehäuseabsatz 28 und dem Achshalter 18 gehalten. Ferner drücken die Niederhalter 45 von oben auf die Elektromotoren 9, so dass auch diese sicher positioniert sind.

Daraufhin wird die Dichtung 8 auf die Gehäuseunterschale 6 aufgesetzt. Zudem werden der Anker 20 und der Stopfen 21 in die jeweiligen Aufnahmenuten 26 der Gehäuseunterschale 6 von oben eingeführt.

In einem weiteren Schritt wird der Kabeleinlass 19 in diejenige Aussparung 32 der Gehäuseoberschale 7 eingesetzt, die oberhalb des Ankers 20 positioniert werden soll. Anschließend wird die Gehäuseoberschale 7 auf die Gehäuseunterschale 6 aufgesetzt, wobei der Kabeleinlass 19 dichtend auf den Befestigungsabschnitt 47 des Ankers 20 drückt und der Stopfen 21 dichtend in der gegenüberliegenden Aussparung 32 der Gehäuseoberschale 7 aufgenommen wird. In einem letzten Schritt wird die Gehäuseoberschale 7 unter Verwendung von Befestigungsschrauben 22 mit der Gehäuseunterschale 6 verschraubt.

Im montierten Zustand können nun die Räder 11 über die durch jeweils ein erstes Zahnrad 16 und ein zweites Zahnrad 17 gebildeten Getriebe motorisch unter Verwendung der Elektromotoren 9 drehend um ihre fluchtend zueinander angeordneten Drehachsen 56, 57 angetrieben werden. Die Drehachsen 56, 57 erstrecken sich dabei zwischen den Motorwellen 43 der Elektromotoren 9.

Um den Antriebswagen 2 an einen weiteren Wagen 3 zu koppeln, werden die beiden Verbindungselementhälften 48, 49 derart aufeinander aufgesteckt, dass die ringförmigen Anker 20 der beiden miteinander zu verbindenden Wagen 2, 3 in den Durchgangsöffnungen des Verbindungselementes aufgenommen werden. Anschließend werden die Verbindungselementhälften 48, 49 miteinander verschraubt. Nunmehr können die Wagen 2, 3 sowohl horizontal als auch vertikal relativ zueinander geschwenkt werden.

Die erfindungsgemäße Inspektionsvorrichtung 1 zeichnet sich insbesondere durch den sehr kompakten Aufbau ihrer Antriebswagen 2 und den modularen Aufbau aus. Dank der lösbaren Verbindung der einzelnen Wagen 2,3 lassen sich diese in beliebiger Reihenfolge und Anzahl miteinander kombinieren. Auch lässt sich die Inspektionsvorrichtung 1 in Abhängigkeit von der durchzuführenden Inspektion hinsichtlich der Inspektionseinrichtungen 4 nach Bedarf zusammenstellen. Fällt während der Durchführung einer Inspektion ein Wagen 2, 3 oder eine Inspektionseinrichtung 4 aus, so lassen sich die entsprechenden Wagen 2, 3 problemlos vor Ort durch einen neuen intakten Wagen 2, 3 ersetzen. Bevorzugt weisen die Wagen 3 grundsätzlich den gleichen Aufbau wie die Wagen 2 auf, nur dass die Wagen 3 nicht mit Elektromotoren 9 und Getrieben versehen sind. Auf diese Weise lassen sich die Herstellungskosten der Inspektionsvorrichtung 1 deutlich senken.

## Patentansprüche

1. Inspektionsvorrichtung (1), die zum Inspizieren von für den Menschen unzugänglichen Bereichen von Maschinen und/oder Anlagekomponenten und/oder Rohrleitungssystemen ausgelegt ist und zumindest einen Antriebswagen (2) sowie zumindest einen weiteren, eine Inspektionseinrichtung (4) aufweisenden Wagen (3) umfasst, der über eine Gelenkeinrichtung (20, 50) mit dem Antriebswagen (2) verbindbar ist,
wobei der Antriebswagen (2) ein Gehäuse (5), zwei Räder (11), die um zwei miteinander fluchtende Drehachsen (56, 57) drehbar an dem Gehäuse (5) gehalten sind, einen eine erste Motorwelle (43) aufweisenden ersten Elektromotor (9), der das erste Rad (11) drehend antreibt, und einen eine zweite Motorwelle (43) ausweisenden zweiten Elektromotor (9) umfasst, der das zweite Rad (11) drehend antreibt,
**dadurch gekennzeichnet, dass**
die Elektromotoren (9) das jeweilige Rad (11) jeweils über ein Getriebe drehend antreiben, und dass sich die Drehachsen (56, 57) zwischen den Motorwellen (43) der Elektromotoren (9) erstrecken.

2. Inspektionsvorrichtung (1) nach Anspruch 1,
**dadurch gekennzeichnet, dass**
die Getriebe identisch ausgebildet sind.

3. Inspektionsvorrichtung (1) nach Anspruch 1 oder 2,
**dadurch gekennzeichnet, dass**
die Getriebe mehrere Zahnräder (16, 17) aufweisen, insbesondere jeweils genau zwei Zahnräder (16, 17).

4. Inspektionsvorrichtung (1) nach Anspruch 3,
**dadurch gekennzeichnet, dass**
die Geometrien der Zahnräder (16, 17) jedes Getriebes derart gewählt sind, dass die Antriebsdrehzahl geringer als die Motordrehzahl ist.

5. Inspektionsvorrichtung (1) nach Anspruch 3 oder 4,
**dadurch gekennzeichnet, dass**
die Zahnräder (16, 17) jeweils über eine Welle-Nabe-Verbindung, insbesondere über eine formschlüssige Welle-Nabe-Verbindung an drehbar am Gehäuse (5) gelagerten, mit den Drehachsen (56, 57) fluchtenden Achsen (10), an denen die Räder (11) drehfest gehalten sind, und an den Motorwellen (43) der Elektromotoren (9) befestigt sind.

6. Inspektionsvorrichtung (1) nach Anspruch 5,
**dadurch gekennzeichnet, dass**
die Achsen (10) formschlüssig zwischen einem aufwärts in den Innenraum des Gehäuses (5) vorstehenden Gehäuseabsatz (28) und zumindest einem von oben auf den Gehäuseabsatz (28) aufgesetzten und mit diesem verbundenen, insbesondere lösbar verbundenen Achshalter (18) positioniert sind.

7. Inspektionsvorrichtung (1) nach einem der vorhergehenden Ansprüche,
**dadurch gekennzeichnet, dass**
die Räder (11) jeweils eine Felge (12) und einen an der Felge (12) gehaltenen, die Lauffläche des Rades bildenden Magnetring (13) aufweisen.

8. Inspektionsvorrichtung (1) nach einem der vorhergehenden Ansprüche,
**dadurch gekennzeichnet, dass**
am Gehäuse (5) wenigstens ein auswärts nach vorne oder hinten vorstehender, ringförmig ausgebildeter Anker (20) vorgesehen ist, der einen Teil der Gelenkeinrichtung bildet.

9. Inspektionsvorrichtung (1) nach Anspruch 8,
**dadurch gekennzeichnet, dass**
die Gelenkeinrichtung ein längliches Verbindungselement (50) aufweist, das an seinen gegenüberliegenden Endbereichen sich parallel zueinander erstreckende Durchgangsöffnungen (51) aufweist, die jeweils zur Aufnahme eines Ankers (20) ausgelegt sind.

10. Inspektionsvorrichtung (1) nach Anspruch 9,
**dadurch gekennzeichnet, dass**
das Verbindungselement (50) zwei lösbar miteinander verbindbare Verbindungselementhälften (48, 49) aufweist, wobei die Trennlinie zwischen den Verbindungselementhälften (48, 49) durch die Durchgangsöffnungen (51) in deren Erstreckungsrichtung verläuft.

11. Inspektionsvorrichtung (1) nach Anspruch 10,
**dadurch gekennzeichnet, dass**
eine Verbindungselementhälfte (48) zumindest einen Verbindungszapfen (54) aufweist, der im montierten Zustand beider Verbindungselementhälften (48, 49) in eine korrespondierende Aussparung (55) der anderen Verbindungselementhälfte (49) greift.

## Claims

1. An inspection device (1) configured for inspecting areas of machines and/or plant components and/or pipeline systems that are inaccessible to humans, and comprising at least one drive trolley (2) as well as at least one further trolley (3) having an inspection apparatus (4) and connectable to the drive trolley (2) via an articulation apparatus (20, 50),
wherein the drive trolley (2) comprises a housing (5), two wheels (11) held on the housing (5) so as to be rotatable about two mutually aligned axes of rotation (56, 57), a first electric motor (9) having a first motor shaft (43) and driving the first wheel (11) in a rotating manner, and a second electric motor (9) having a second motor shaft (43) and driving the second wheel (11) in a rotating manner,
**characterised in that**
the electric motors (9) each drive the respective wheel (11) in a rotating manner via a gearbox, and **in that** the axes of rotation (56, 57) extend between the motor shafts (43) of the electric motors (9).

2. The inspection device (1) of claim 1,
**characterised in that**
the gearboxes are formed so as to be identical.

3. The inspection device (1) of claim 1 or 2,
**characterised in that**
the gearboxes have multiple gearwheels (16, 17), in particular each have exactly two gearwheels (16, 17).

4. The inspection device (1) of claim 3,
**characterised in that**
the geometries of the gearwheels (16, 17) of each gearbox are selected such that the drive speed is lower than the motor speed.

5. The inspection device (1) of claim 3 or 4,
**characterised in that**
the gearwheels (16, 17) are each fastened via a shaft-hub connection, in particular via a positive-locking shaft-hub connection, to axles (10) which are rotatably mounted on the housing (5) and are aligned with the axes of rotation (56, 57) and on which the wheels (11) are held in a rotationally fixed manner, and to the motor shafts (43) of the electric motors (9).

6. The inspection device (1) of claim 5,
**characterised in that**
the axles (10) are positioned in a positive-locking manner between a housing shoulder (28) projecting upwards into the interior of the housing (5) and at least one axle holder (18) placed on top of the housing shoulder (28) from above and connected, in particular detachably connected, thereto.

7. The inspection device (1) of any one of the preceding claims,
**characterised in that**
the wheels (11) each have a rim (12) and a magnetic ring (13) held on the rim (12) and forming the tread of the wheel.

8. The inspection device (1) of any one of the preceding claims,
**characterised in that**
at least one annularly formed armature (20) projecting outwards forwards or backwards is provided on the housing (5) and forms part of the articulation apparatus.

9. The inspection device (1) of claim 8,
**characterised in that**
the articulation apparatus has an elongated connecting element (50) having, at its opposite end regions, through openings (51) extending parallel to one another and each configured to receive an armature (20).

10. The inspection device (1) of claim 9,
**characterised in that**
the connecting element (50) has two connecting element halves (48, 49) detachably connectable to one another, wherein the dividing line between the connecting element halves (48, 49) runs through the through openings (51) in their direction of extension.

11. The inspection device (1) of claim 10,
**characterised in that**
a connecting element half (48) has at least one connecting tenon (54) which, in the assembled state of both connecting element halves (48, 49), engages a corresponding recess (55) of the other connecting element half (49).

## Revendications

1. Dispositif d'inspection (1) conçu pour inspecter des zones de machines et/ou de composants d'installations et/ou de tuyauteries inaccessibles aux personnes et comprenant au moins un chariot d'entraînement (2) et au moins un autre chariot (3) muni d'un dispositif d'inspection (4) pouvant être relié au chariot d'entraînement (2) par l'intermédiaire d'un dispositif articulé (20, 50),
dans lequel le chariot d'entraînement (2) comprend un boîtier (5), deux roues (11) qui sont montées rotatives sur le boîtier (5) autour de deux axes de rotation mutuellement alignés (56, 57), un premier moteur électrique (9) ayant un premier arbre moteur (43) qui entraîne la première roue (11) en rotation, et un deuxième moteur électrique (9) ayant un deuxième arbre moteur (43) qui entraîne la deuxième roue (11) en rotation,
**caractérisé en ce que**
les moteurs électriques (9) entraînent la roue respective (11) en rotation par l'intermédiaire d'un engrenage, et que les axes de rotation (56, 57) s'étendent entre les arbres moteurs (43) des moteurs électriques (9).

2. Dispositif d'inspection (1) selon la revendication 1,
**caractérisé en ce que**
les engrenages sont conçues de manière identique.

3. Dispositif d'inspection (1) selon la revendication 1 ou 2,
**caractérisé en ce que**
les engrenages comportent une pluralité de roues dentées (16, 17), en particulier exactement deux roues dentées (16, 17) chacun.

4. Dispositif d'inspection (1) selon la revendication 3,
**caractérisé en ce que**
les géométries des engrenages (16, 17) de chaque rapport sont sélectionnées de telle sorte que la vitesse d'entrée soit inférieure à la vitesse du moteur.

5. Dispositif d'inspection (1) selon la revendication 3 ou 4,
**caractérisé en ce que**
les roues dentées (16, 17) sont chacune fixées par l'intermédiaire d'une liaison arbre-moyeu, en particulier par une liaison arbre-moyeu positive, à des axes (10) montés rotatifs sur le boîtier (5) et alignés avec les axes de rotation (56, 57), sur lesquels les roues (11) sont maintenues fixes en rotation, et aux arbres moteurs (43) des moteurs électriques (9).

6. Dispositif d'inspection (1) selon la revendication 5,
**caractérisé en ce que**
les axes (10) sont positionnés par complémentarité de forme entre un épaulement de boîtier (28) faisant saillie vers le haut à l'intérieur du boîtier (5) et au moins un support d'axe (18) placé par le haut sur l'épaulement de boîtier (28) et relié à celui-ci, en particulier relié de manière amovible.

7. Dispositif d'inspection (1) selon l'une quelconque des revendications précédentes,
**caractérisé en ce que**
les roues (11) comportent chacune une jante (12) et un anneau magnétique (13) maintenu sur la jante (12) et formant la surface de roulement de la roue.

8. Dispositif d'inspection (1) selon l'une quelconque des revendications précédentes,
**caractérisé en ce que**
au moins un ancrage annulaire (20) faisant saillie vers l'extérieur vers l'avant ou vers l'arrière est prévu sur le boîtier (5), lequel ancrage fait partie du dispositif d'articulation.

9. Dispositif d'inspection (1) selon la revendication 3,
**caractérisé en ce que**
le dispositif d'articulation comprend un élément de liaison allongé (50) qui présente des ouvertures traversantes (51) s'étendant parallèlement les unes aux autres à ses régions d'extrémité opposées, chacune d'elles étant conçue pour recevoir un ancrage (20).

10. Dispositif d'inspection (1) selon la revendication 9,
**caractérisé en ce que**
l'élément de liaison (50) comporte deux moitiés d'élément de liaison (48, 49) qui peuvent être reliées l'une à l'autre de manière amovible, la ligne de séparation entre les moitiés d'élément de liaison (48, 49) passant à travers les ouvertures traversantes (51) dans le sens de leur extension.

11. Dispositif d'inspection (1) selon la revendication 10,
**caractérisé en ce que**
une moitié d'élément de connexion (48) comporte au moins une broche de connexion (54) qui, à l'état assemblé des deux moitiés d'élément de connexion (48, 49), s'engage dans un évidement correspondant (55) de l'autre moitié d'élément de connexion (49).
